# FASCICULE DE BREVET EUROPEEN

(11) **EP 1 318 439 B1**
(45) Date de publication et mention de la délivrance du brevet: **15.06.2005**
(21) Numéro de dépôt: 02293009.3
(22) Date de dépôt: 05.12.2002
(51) Int. Cl.: G05B 17/02, G05B 15/02

(54) **Procédé et système d'optimisation de la conception, de la réalisation et de la mise au point de systèmes pilotes**
Verfahren zur Optimierung des Entwurfs,der Herstellung und der Entwicklung von Steuerungssystemen
Method and system for optimizing the design , the implementation and the development of pilot systems

(30) Priorité: 10.12.2001 FR 0116080
(43) Date de publication de la demande: 11.06.2003
(73) Titulaire: Sherpa Engineering, 92000 Nanterre (FR)
(72) Inventeur: Brunet, Jean, 77240 Cesson La Foret (FR)
(74) Mandataire: de Saint-Palais, Arnaud Marie

(56) Documents cités:
- US-B1- 6 289 255
- US-B1- 6 311 144

## Description

La présente invention a pour objet un procédé et un système d'optimisation de la conception, de la réalisation et de la mise au point de systèmes pilotés intégrant au moins un domaine technique : mécanique, hydraulique, électricité, électronique, thermique, thermodynamique ou autre.

On entend par système piloté un système technique appartenant à l'un ou plusieurs des domaines précités, qui comporte généralement un ensemble d'organes et de composants de fonctionnement interconnectés, un ensemble d'organes et de composants d'instrumentation et un système d'information ou système de contrôle/commande, et dont le comportement général est régi par un système de décision, qui délivre un ensemble d'ordres et/ou de consignes manipulables, à partir d'un environnement humain et/ou à partir d'autres systèmes.

Le procédé selon l'invention repose sur l'élaboration et l'emploi systématiques de modèles génériques pouvant appartenir à différents types ou classes de modèles énumérés plus loin, à toutes les étapes de conception, de réalisation et de validation d'un projet de système piloté, et sur la caractérisation et la validation systématiques de ces modèles par des essais appropriés, afin de servir de guide à la conception et d'analyser le comportement de ce système dans tous les cas d'utilisation normaux ou exceptionnels, en fonction de l'ensemble des contraintes imposées par un ensemble de spécifications.

Le procédé selon l'invention intéresse aussi bien les projets limités ne faisant intervenir que l'un des domaines techniques précités, que les projets les plus complexes qui font appel à des compétences et des métiers très divers, avec des interactions très nombreuses entre toutes les parties constitutives d'un système, tels que la création d'un modèle de véhicules par exemple.

Il propose une solution complète d'élaboration d'un projet technique, depuis les travaux d'analyse préalable permettant l'élaboration des modèles des différents types précités ou l'adaptation de modèles existants, jusqu'aux phases de validation finales du projet, en passant par toutes les étapes intermédiaires d'étude, de choix de solutions et de mise au point des différents constituants d'un système et de leur intégration progressive dans l'ensemble.

Situé dans une optique d'efficacité industrielle, il a pour objet de conduire à des économies globales sur les temps et les coûts d'étude et d'essais de mise au point, de permettre d'enrichir constamment les connaissances dans chacun des métiers concernés grâce à l'archivage systématique, après un travail de généralisation, des modèles élaborés à l'occasion de chaque projet et des résultats de simulation.

On connaît le déroulement classique de la conception et de la réalisation d'un projet technique, désigné couramment sous le nom de cycle en « V » :
- Dans la branche de gauche du « V », dite branche descendante, correspondant aux phases de conception, on rencontre habituellement, de haut en bas, les étapes suivantes :
   * après une éventuelle étude de marché, la définition des prestations finales recherchées (performances, attentes explicites et implicites de la clientèle, coût, image de marque, qualité, fiabilité, réglementation, etc...) fait l'objet d'une analyse des besoins permettant l'élaboration des spécifications techniques de besoins ;
   * ces spécifications de besoins font ensuite l'objet d'une analyse fonctionnelle et technique afin de définir les architectures fonctionnelles du système et ses prestations physiques (phases de fonctionnement, modes de fonctionnement nominal et dégradé, conditions d'utilisation, conditions d'environnement, etc...), cette analyse technique conduisant à la définition des spécifications techniques générales, accompagnées généralement de dossiers de justification;
   * à partir de ces spécifications générales sont élaborées les architectures organiques du système (fonctionnalités et critères de performances des différents organes, attribution aux différents métiers concernés), cette analyse organique aboutissant aux spécifications techniques détaillées ;
   * le dernier niveau de conception consiste en la définition, à l'intérieur de chaque organe, des différents composants ou pièces qui le constituent, exprimée par des spécifications techniques de réalisation.
- La base du « V » correspond à la réalisation du système concerné.
- Dans la branche de droite du « V », dite branche montante, qui correspond au processus d'intégration et de validation, se succèdent habituellement, de bas en haut, les étapes suivantes :
   * on procède d'abord aux essais de validation des composants, en conformité avec les spécifications techniques de réalisation ;
   * les tests se poursuivent au niveau des organes, avec toutes les opérations de réglages, de retouches et de mises au point, jusqu'à l'intégration et la validation des différents sous-ensembles, qui doivent être conformes aux spécifications techniques détaillées ;
   * les vérifications portent ensuite sur la validation des prestations physiques fournies par le système dans son ensemble, telles qu'elles sont exigées par les spécifications techniques générales ;
   * la procédure se termine par la validation des prestations et performances du point de vue de l'utilisateur du système, en conformité avec les spécifications techniques de besoins, avant de lancer la commercialisation de ce système.

Dans une telle procédure classique d'étude, de développement, de réalisation et de mise au point d'un système piloté, un inconvénient majeur est que, dès lors que les essais de validation font apparaître une défaillance, une lacune ou une non-conformité aux différentes spécifications techniques, il devient inévitable de reprendre un certain nombre d'étapes du cycle de développement en « V », jusqu'à l'élimination des imperfections constatées.

Ces retours en arrière dans le programme de développement du système engendrent des coûts d'études et surtout d'essais supplémentaires généralement non prévus dans le budget du projet. Ils sont sources également de retards qui peuvent pénaliser gravement la réussite du programme.

Ces reprises d'études et de mises au point représentent un travail d'autant plus important que les défauts seront constatés à un stade plus avancé dans les essais de validation. Par exemple, une défaillance mise en évidence lors de l'intégration de différents organes du système et résultant d'un défaut de compatibilité entre deux de ces organes, bien que validés individuellement, peut remettre en cause tout le cycle de conception, de réalisation et de validation de chacun de ces organes.

En outre, il convient d'ajouter que la redéfinition d'un composant ou d'un organe est susceptible de faire apparaître de nouveaux défauts par suite des remaniements apportés aux spécifications générales ou détaillées, qui risquent de perdre alors une partie de leur cohérence, notamment sur le plan technique.

Le risque de constater une défaillance ou une non-conformité lors des étapes de validation est bien entendu d'autant plus important que le système concerné présente une plus grande complexité et fait appel à un plus grand nombre de compétences pluridisciplinaires. Il devient alors de plus en plus difficile de maîtriser de façon complète et cohérente l'ensemble du projet en question, aussi élevés que soient les niveaux de compétences et la qualité de l'organisation au sein de l'équipe chargée de le mener à bien.

Le procédé selon l'invention apporte une réponse générale à ces inconvénients rencontrés lors de la conception d'un système piloté au sens défini précédemment, quel que soit le niveau de complexité de ce système.

Il repose sur la mise en oeuvre de modèles de différents types et classes décrits plus loin, qui peuvent être prédéveloppés, sélectionnés au sein d'une bibliothèque de modèles déjà élaborés par l'utilisateur à l'occasion d'études similaires, adaptés à partir de modèles existants ou créés spécialement pour les besoins des études. Ces modèles permettent d'étudier virtuellement le comportement du système dans toutes les plages d'utilisation et dans tous les cas de contraintes spécifiés, et de supprimer ainsi la plus grande partie des surcoûts et des retards imprévus lorsque les essais de validation font apparaître la nécessité de procéder à des modifications plus ou moins importantes sur le système prototype déjà physiquement réalisé.

Cet appel systématique à la modélisation est effectif à tous les niveaux d'un processus d'étude et de développement tel que décrit plus haut, depuis le modèle d'ensemble du système considéré à l'échelle macroscopique jusqu'au modèle représentant un composant élémentaire, les modèles des différents niveaux étant progressivement interconnectés jusqu'à disposer d'une représentation architecturale du système rendue suffisamment réaliste par une démarche systématique de validation des modèles à partir des résultats de mesures relevés sur les composants et les organes déjà existants.

Outre l'avantage mentionné plus haut d'éviter les coûts et les délais inhérents à toute modification apportée à un sous-ensemble physique, le procédé selon l'invention permet un enrichissement des connaissances dans chaque métier concerné, une réduction du coût des essais de simulation permettant de disposer d'une grande masse de résultats dans un temps court. Grâce à leur mise en bibliothèque, les modèles et les résultats de simulation peuvent être réutilisés lors de la réalisation de projets similaires, pourvu que la conception des modèles soit suffisamment générique, et donc transposable d'un système à un autre.

D'autres avantages du procédé selon l'invention sont notamment :
- de supprimer une partie des essais de réglage et de validation si les modèles sont suffisamment fiables et prédictifs,
- d'éviter de reconduire des essais similaires sur des parties analogues du système,
- de sécuriser les choix de conception par une validation anticipée des concepts retenus,
- de rendre intelligible le système et son processus de conception,
- de permettre de justifier les choix de conception par une démarche rationnelle et de les faire comprendre à tous les acteurs d'un projet,
- d'aider aux choix d'architectures innovantes pour le système,
- de faciliter la compréhension de problèmes imprévus.

Les modèles mis en oeuvre par le procédé selon l'invention peuvent appartenir à différentes classes :
- Les modèles de connaissance, communément appelés « boîtes blanches », qui intègrent les lois de la physique et permettent d'expliquer les phénomènes observés. Ces modèles mettent en jeu des paramètres physiques et ont un caractère prédictif dans le domaine de validité des lois de la physique. Ils peuvent être de nature microscopique (les paramètres étant distribués) ou macroscopique (les paramètres étant alors localisés).
- Les modèles de représentation, communément appelés « boîtes noires », qui reproduisent globalement un comportement identique au système, au sous-ensemble ou au composant réel concerné, en fonctionnement statique ou dynamique. Ces modèles mettent en jeu des paramètres sans signification physique directe et n'ont qu'un caractère prédictif très limité. Ils ne permettent pas la compréhension des mécanismes internes de l'élément représenté.
- Les modèles mixtes, qui mêlent les deux classes de modèles précédentes. Généralement, la structure de ces modèles est de type physique et macroscopique, les lois fondamentales de la physique telles que la conservation de la masse, de l'énergie ou de la quantité de mouvement étant explicites, tandis que les lois de comportement des composants intervenant dans ces modèles peuvent être représentées par des « boîtes noires ».

On peut par ailleurs distinguer, selon l'invention, les différents types de modèles suivants :
- Les modèles d'analyse, destinés à comprendre et expliquer des phénomènes particuliers intéressant tout ou partie du système, par exemple l'analyse des régimes transitoires ou l'analyse fréquentielle, ou déterminer des caractéristiques intrinsèques principales.
- Les modèles de conception, utilisés principalement pour les choix des architectures fonctionnelles et organiques du système, pour les études de dimensionnement ou pour la définition du système de contrôle-commande associé à un système piloté. Ces modèles appartiennent généralement à la classe des modèles de représentation.
- Les modèles de simulation, ayant pour but la représentation du comportement, dans ses différents modes de fonctionnement statique, dynamique ou transitoire, d'un système piloté, d'un sous-ensemble ou d'un composant de ce système. Suivant le stade d'avancement d'une étude, un modèle de simulation peut avoir au départ une forme macroscopique et simplifiée, pour évoluer ensuite, si nécessaire, vers une représentation plus complète et détaillée.
- Les modèles temps réel, dont l'exécution s'effectue en temps réel par rapport à l'entité physique que ces modèles représentent.

Le procédé selon l'invention repose donc sur la mise en oeuvre d'une base de données de modèles, ceux-ci devant être, pour assurer la cohérence de la base et la meilleure application du procédé :
- hiérarchisés en modèles de systèmes, sous-systèmes, organes, composants ;
- polymorphes, c'est-à-dire disponibles selon les besoins des études dans les différentes formes correspondant aux classes de modèles définies précédemment: modèles de connaissance, modèles de représentation, modèles mixtes ;
- adaptés aux besoins de l'ingénierie et donc disponibles si nécessaire dans les différents types énumérés précédemment : modèles d'analyse, modèles de conception, modèles de simulation, modèles temps réel ;
- génériques, c'est-à-dire pourvus d'une structure générique, faisant appel à des lois constitutives fondées sur les lois de la similitude et transposables à des systèmes analogues ;
- prédictifs et donc valables dans des domaines étendus de fonctionnement et d'environnement ;
- aisément interconnectables entre eux.

L'élaboration des spécifications de ces modèles et leur réalisation est guidée par un ensemble de documentations et de bases de données qui peuvent appartenir à trois niveaux de propriété :
- Dans le domaine public sont disponibles notamment :
   - des listes de références bibliographiques dans les différents domaines techniques concernés par le système piloté en projet ;
   - des bases de données relatives aux matériaux ;
   - des bases de données concernant les fluides ;
   - des bases de données d'essais ;
   - des bases de données de modèles élémentaires.
- Un deuxième ensemble de supports à la conduite des études et au développement des modèles associés est mis à la disposition de l'utilisateur du procédé selon l'invention, notamment :
   - des guides méthodologiques de modélisation, d'analyse, de spécification, de conception, de validation et de mise en bibliothèques des modèles ;
   - des bases de modèles génériques et polymorphiques ;
   - des bases de programmes utilitaires génériques et d' « outils » par métiers ;
   - des notices d'utilisation de ces différents moyens.
- L'élaboration des modèles peut s'appuyer enfin sur des moyens déjà disponibles chez l'utilisateur du procédé et appartenant donc à celui-ci, par exemple :
   - des bases de modèles applicatifs déjà développés par l'utilisateur ;
   - des bases de données d'essais ou autres archivées antérieurement par l'utilisateur.

Les modèles génériques mis à la disposition de l'utilisateur du procédé répondent aux caractéristiques souhaitables exposées plus haut et à d'autres caractéristiques permettant leur emploi par différents utilisateurs et pour différents types d'applications, c'est-à-dire qu'ils sont notamment :
- polymorphes, et donc disponibles dans les différents types et classes énumérés précédemment,
- compatibles avec différents supports informatiques, leur programmation étant réalisée par exemple en langage C++,
- hiérarchisés en niveaux progressifs d'intégration (fonctions de base, fonctions ou champs de type « bond-graph », sous-ensembles technologiques, sous-systèmes, etc...),
- auto-adaptatifs en ce qui concerne la structure du modèle, les variables d'état et les variables d'entrée-sortie,
- paramétrables (par exemple, dans le cas de modèles concernant des fluides, ils permettent le choix de fluides monophasiques ou diphasiques, purs ou composés).

Avantageusement, la mise en oeuvre des modèles associés à chaque niveau du cycle d'ingénierie comporte au moins les étapes suivantes :
- établissement des spécifications des modèles nécessaires à partir des besoins résultant du processus de conception correspondant au niveau considéré ;
- élaboration et validation des dits modèles grâce à des essais de caractérisation au niveau de la structure des modèles et de l'identification des paramètres associés ;
- essais de validation système selon le niveau correspondant de la branche montante du cycle ;
- prise en compte des résultats qualitatifs et quantitatifs fournis par les modèles validés, dans le processus de conception et réitération éventuelle de la démarche jusqu'à ce que les exigences du processus de conception soient atteintes ;
- détermination des spécifications du niveau considéré.

Un mode d'exécution de l'invention sera décrit ci-après, à titre d'exemple non limitatif, avec référence aux dessins annexés dans lesquels :
La figure 1 illustre l'architecture générale d'un système piloté ;
La figure 2 montre un cycle traditionnel en «V» de conception, de réalisation, d'intégration et de validation correspondant à l'ingénierie d'un système piloté ;
La figure 3 représente schématiquement l'architecture d'un système utilisé à chaque niveau intermédiaire du cycle en « V » et les interactions existant avec les niveaux supérieur et inférieur ;
La figure 4 représente une architecture analogue dans le cas particulier du niveau le plus élevé du cycle en « V » ;
La figure 5 représente le même schéma dans le cas du niveau le plus bas du cycle en « V », c'est-à-dire celui des composants élémentaires ;
La figure 6 présente sous forme d'histogrammes les importances comparées des volumes d'essais nécessaires dans la démarche traditionnelle du cycle en « V » et dans l'approche proposée par l'invention ;
La figure 7 montre un outil de traitement associé à une bibliothèque de modèles ;
La figure 8 est une représentation schématique de l'outil de traitement utilisé dans le cas particulier du domaine de la Thermique des fluides.

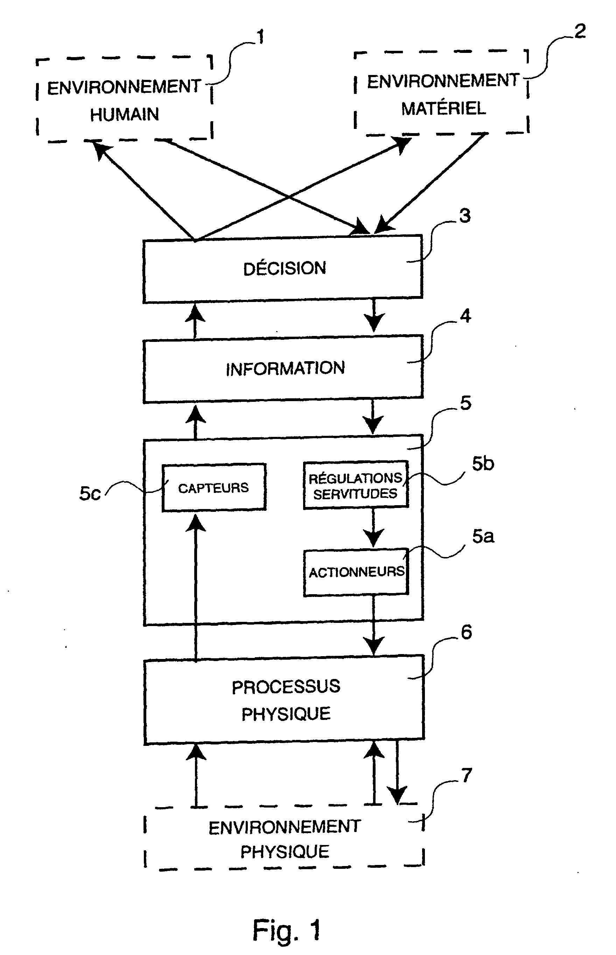

La figure 1 donne l'architecture générale d'un système piloté dans laquelle :
- le système de décision 3 reçoit des ordres et/ou des consignes d'un environnement humain 1 et/ou d'un environnement matériel 2, et restitue à ces environnements des informations d'état ou de mesure du système ; le système de décision assure le séquencement des ordres et l'élaboration des commandes générales du système ;
- le système de décision 3 communique avec un système d'information 4 qui assure l'acquisition et le stockage des informations d'état et de mesure (sens montant) et la mise en forme et le stockage des ordres et consignes (sens descendant) ;
- le système d'information 4 agit sur les actionneurs 5a d'un système d'instrumentation 5 par l'intermédiaire des dispositifs de régulation et de servitude 5b, et reçoit des informations à partir de capteurs 5c ;
- le système d'instrumentation 5 est connecté par les actionneurs 5a et les capteurs 5c à un processus physique à piloter 6 ;
- le processus physique 6 agit sur son environnement physique 7 et inversement cet environnement réagit sur le processus, en même temps que des mesures relatives à l'environnement sont prises en compte par certains capteurs.

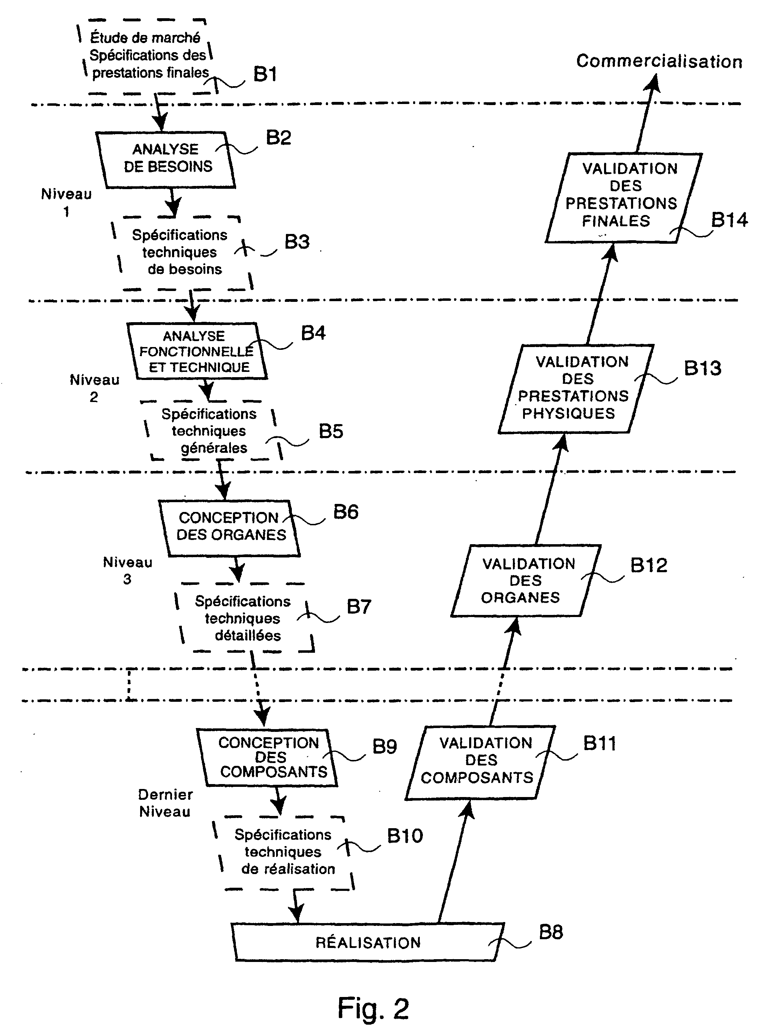

Sur la figure 2 apparaît le cycle d'ingénierie d'un système tel que décrit plus haut, avec sa branche de gauche descendante, correspondant aux étapes de conception, dans laquelle :
- les spécifications finales (bloc B₁) à respecter font l'objet d'une analyse de besoins (bloc B₂) pour élaborer les spécifications techniques de besoins (bloc B₃),
- l'analyse fonctionnelle et technique (bloc B₄) conduit aux spécifications techniques générales (bloc B₅),
- la conception des organes (bloc B₆) permet d'établir les spécifications techniques détaillées (bloc B₇),
- à partir de ce troisième niveau, il est possible de rencontrer, selon la complexité du système étudié, plusieurs niveaux intermédiaires, les organes ou sous-systèmes entrant dans la composition du système pouvant eux-mêmes être décomposés hiérarchiquement en sous-organes,
- le dernier niveau ou niveau inférieur avant la réalisation (bloc B₈) correspond à la conception des composants élémentaires (bloc B₉), qui aboutit aux spécifications techniques de réalisation (bloc B₁₀),
et sa branche de droite montante, correspond aux phases d'intégration et d'essais de validation, dans laquelle sont réalisées :
- au niveau inférieur, la validation des composants (bloc B₁₁),
- de l'avant-dernier niveau (ici le niveau 3), la validation des organes ou de leurs sous-ensembles (bloc B₁₂),
- au niveau 2, la validation des prestations physiques définies par les spécifications techniques de besoins (bloc B₁₃),
- au niveau 1, la validation des prestations finales avant d'entreprendre la commercialisation (bloc B₁₄).

Le procédé selon l'invention établit, entre les deux branches du cycle en « V » et à chaque niveau de celui-ci, un ensemble de liens opératoires de spécification, de caractérisation et de validation, à l'aide de modèles des différentes classes et des différents types mentionnés plus haut.

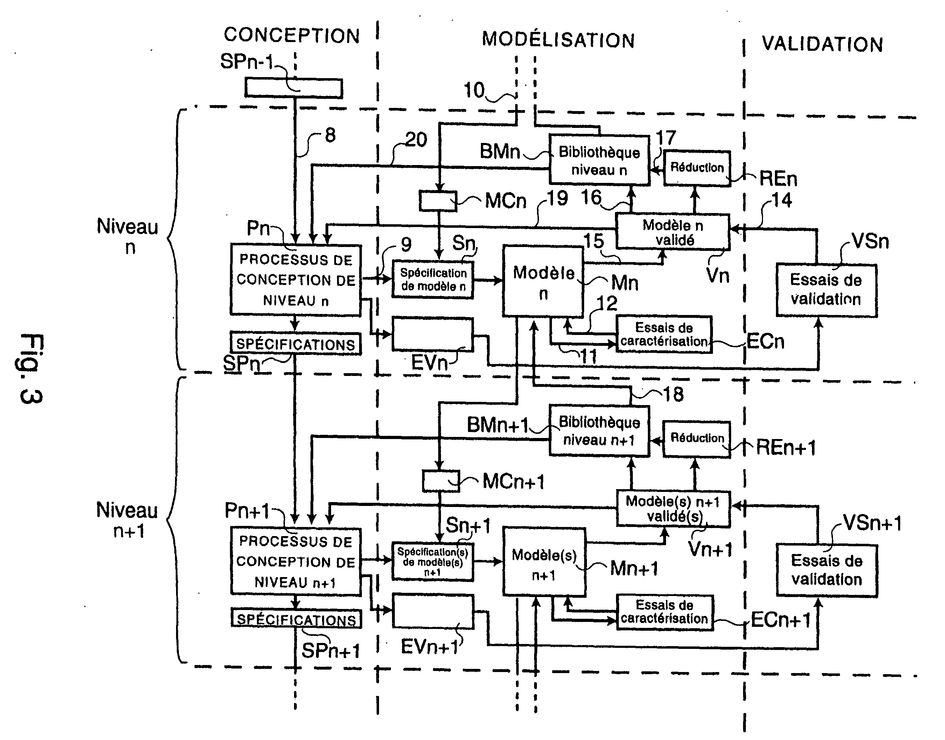

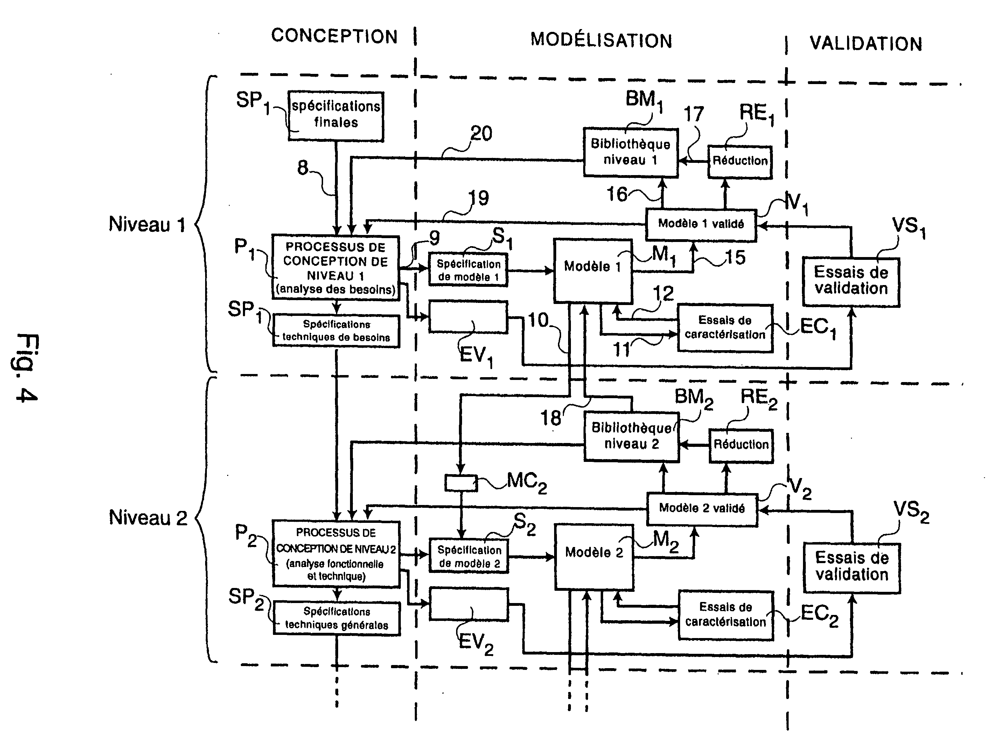

La figure 3 donne le détail, pour un niveau intermédiaire n (par exemple dans les cas des niveaux 3 et suivants), pour un organe ou sous-ensemble à concevoir et à valider, de ces liens opératoires et interactions, à l'intérieur du niveau concerné et en relation cohérente avec le niveau supérieur n - 1 et le niveau inférieur n + 1.

Sur la figure 3, la colonne de gauche, intitulée Conception, correspond à la branche de gauche du cycle en « V » et la colonne de droite, intitulée Validation Système, correspond à la branche de droite de ce cycle.

Le procédé selon l'invention comporte les étapes suivantes :
- Le processus (Pn) de conception de niveau n répond aux spécifications (Sp n - 1) établies à l'issue du processus de conception de niveau supérieur n - 1.
- Les spécifications (Sn) d'un ou plusieurs modèles de niveau n, qui peuvent être des différents types et classes énumérés précédemment, et dont un exemple (Mn) est représenté sur la figure 3 sous la dénomination de Modèle n, sont déterminés (liaison 9) par les besoins résultant du processus de conception de niveau n. Une spécification (Sn) de modèle adapté de façon optimale aux besoins de l'étude est obtenue notamment grâce à :
   * une analyse préliminaire des objectifs et contraintes de la conception,
   * une analyse approfondie du système lui-même,
   * une bonne connaissance du ou des métiers concernés,
   * une compétence suffisante dans les méthodes de modélisation.

   Il est généralement préférable de définir un modèle (Mn) présentant un large éventail de choix et d'options de façon à en extraire le modèle le mieux adapté grâce au choix des meilleures options sur :
   * la structure et le niveau de complexité du modèle,
   * la nature et la composition des grandeurs de propagation (fluides par exemple),
   * le niveau de paramétrage correspondant aux besoins de l'étude.
- La mise en cohérence (MCn) de ces spécifications du modèle (Mn) avec un ou plusieurs modèles du niveau supérieur n - 1 (liaison 10) doit être assurée, dans l'optique d'une éventuelle intégration du modèle (Mn) au sein de ce niveau supérieur. Cette cohérence revêt différents aspects :
   * cohérence structurelle, cohérence des dimensionnalités et des représentations,
   * cohérence des flux d'information et des flux physiques,
   * cohérence fréquentielle.
- La spécification d'une procédure d'essais de caractérisation (ECn) (liaison 11) est généralement nécessaire à l'élaboration et à la validation du modèle (Mn). Le but de ces essais est de caractériser dans le choix de sa structure et des phénomènes à représenter le modèle n. L'exploitation des résultats des essais de caractérisation (ECn) permet d'identifier éventuellement les paramètres intervenant dans ce modèle et de valider (bloc Vₙ) la représentativité du modèle (structure et paramètres).
- La spécification d'une procédure d'essais de validation de niveau n (bloc VSn), effectués sur bancs d'essais, est optimisée à partir des modèles de la base des modèles. Ces essais de validation du système (VSn) permettent de valider les choix de conception et les critères techniques au fur et à mesure de l'intégration progressive de chaque sous-ensemble, organe ou composant dans l'ensemble qui le contient.
- Des opérations de réduction (REn) sur le modèle n validé au bloc Vₙ peuvent être effectuées grâce à des moyens très divers, notamment :
   * simplifications de la structure du modèle,
   * réduction du nombre de variables manipulées,
   * mise en évidence de variables adimensionnelles,
   * mise à l'échelle des variables,
   * réduction du nombre de dimensions prises en compte,
   * réduction de l'ordre du constituant modélisé,
   * approximation de certains phénomènes,
   * emploi de cartographies ou de tabulations, etc...

   L'utilisation d'une ou plusieurs formes de modèles ainsi réduits présente de nombreux avantages tels que :
   * l'allégement des temps de calcul grâce à la simplification du modèle,
   * la facilité d'interprétation des résultats numériques,
   * l'aide à l'analyse et à la conception,
   * une meilleure maîtrise du modèle,
   * une plus grande sécurité.
- Un archivage du modèle n validé, sous sa forme primaire (liaison 16) et/ou sous ses différentes formes réduites (liaison 17), peut être avantageusement effectué au sein d'une bibliothèque de modèles (BMn) hiérarchisée par niveaux et dont chaque niveau n est organisé selon les différents types et classes de modèles.
- Des modèles de sous-ensembles extraits de la bibliothèque (BM n +1) de niveau inférieur n+ 1, généralement sous leurs formes réduites, peuvent intervenir (liaison 18) dans l'élaboration du modèle n (Mn), cette intégration étant possible grâce à la mise en cohérence (MCn) prévue lors de l'établissement de la spécification (Sn) de modèle n.
- L'exploitation des résultats (liaison 14) des essais de validation système (VSn) permet, après réitération éventuelle des essais, d'obtenir (liaison 15) un modèle n validé (bloc Vₙ).
- Le comportement du modèle n validé (Vn) peut réagir (liaison 19) sur le processus de conception de niveau n (Pn) ou faire apparaître la nécessité d'aménagements des spécifications (modèle et essais de validation) (SPn) résultant de ce processus, la démarche de conception, de modélisation et de validation devant éventuellement être partiellement réitérée.
- De la même manière, les modèles sous forme réduite contenus dans la bibliothèque (BMn) peuvent influer (liaison 20) sur le processus de conception de niveau n (Pn).

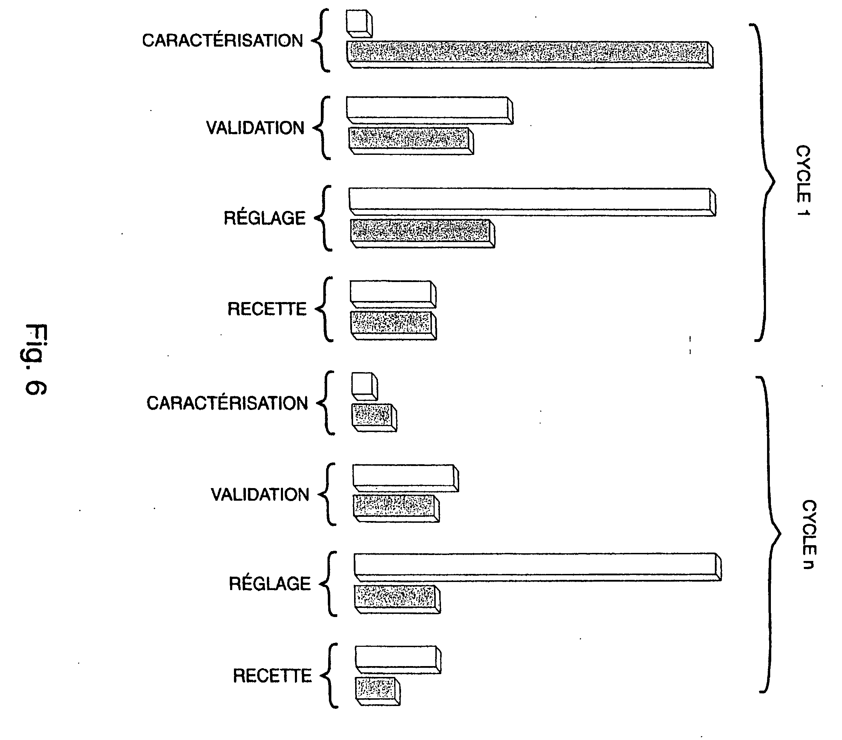

La figure 4 représente l'architecture du système dans le cas où les niveaux n considérés sont les niveaux 1 et 2, le processus de conception étant l'analyse des besoins du système et les spécifications résultantes les spécifications techniques de besoins. La démarche reste la même dans son ensemble que celle adoptée pour les niveaux inférieurs. Seules dans le niveau 1 les interactions de mise en cohérence (MC) et d'extraction de modèle de la bibliothèque (liaison 18) vers le niveau supérieur sont supprimées en l'absence de ce niveau.

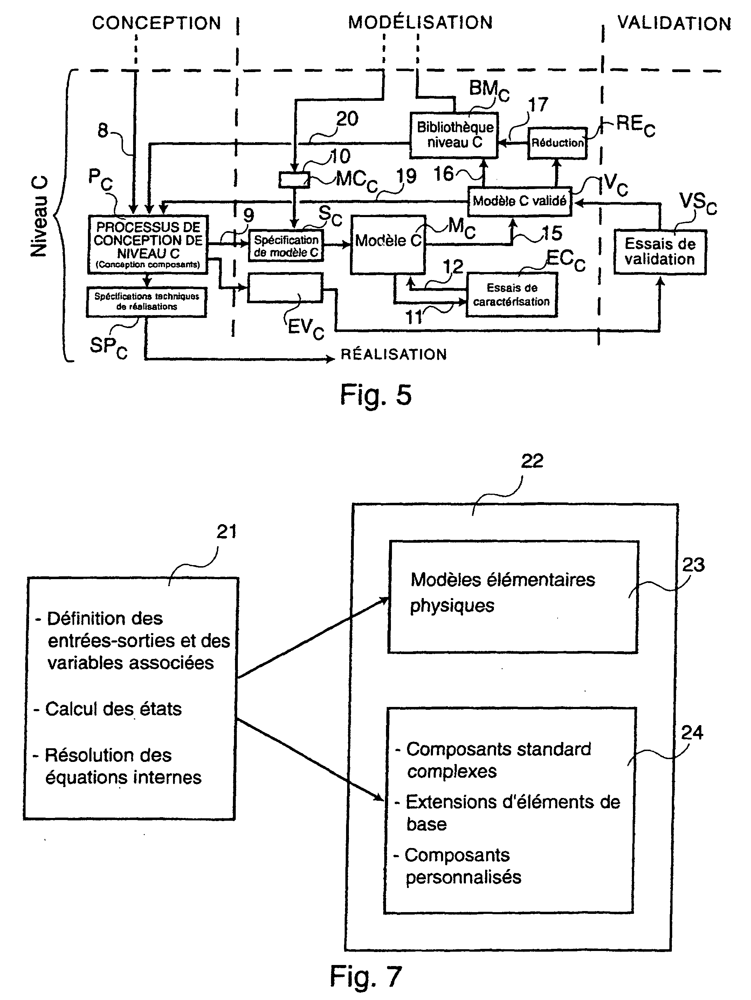

Inversement, la figure 5 représente l'architecture du système lorsque le niveau n considéré est le niveau le plus bas du cycle en « V », dénommé sur la figure 5 le niveau c, le processus de conception étant alors la conception des composants et les spécifications résultantes les spécifications techniques de réalisation. Dans ce cas également, la démarche méthodologique reste similaire, seules les interactions de mise en cohérence (MC) et d'extraction de modèle de la bibliothèque (liaison 18) vers le niveau inférieur sont supprimées.

Dans un processus complet d'étude, de réalisation et de validation d'un système piloté, le cycle en « V » d'ingénierie doit en général être parcouru un certain nombre de fois, ces réitérations successives permettant de converger progressivement vers la validation complète du système en question.

Une des conséquences les plus coûteuses de ces réitérations est la reprise partielle ou totale des essais associés aux différents niveaux du cycle.

Dans la démarche traditionnelle du cycle en « V », les essais à réaliser peuvent être classés en trois grandes catégories :
- les essais de faisabilité et de validation des choix sur maquettes ou prototypes,
- les essais de réglage et de mise au point du système,
- les essais de validation et de recette finale.

Le procédé selon l'invention ajoute à ces trois catégories une quatrième, à savoir les essais de caractérisation des différents modèles.

Mais ce surcroît apporté au volume total des essais nécessaires lors du premier parcours du cycle en « V » est largement compensé par une réduction très importante du volume des essais au cours des réitérations suivantes, cet avantage étant d'autant plus sensible que le nombre de réitérations est élevé.

En effet, les modèles mis en oeuvre conformément au procédé selon l'invention apportent :
- pour les essais de faisabilité, une aide à l'analyse rapide des problèmes et des interactions complexes, ainsi qu'une réactivité et une force de proposition accrue ;
- pour les essais de réglage, une réduction importante du volume de ces essais par l'élimination d'une grande partie des problèmes rencontrés et grâce aux simulations, le remplacement d'un grand nombre de paramètres de réglage interdépendants par un nombre réduit de paramètres indépendants ;
- pour les essais de validation, une analyse et une compréhension rapides des écarts.

La figure 6 illustre sous forme d'histogrammes cet avantage majeur du procédé selon l'invention. Elle présente, pour chacune des quatre catégories d'essais (caractérisation, validation, réglage et recette) les volumes statistiques comparés des essais à réaliser selon la méthode traditionnelle (en blanc sur la figure) et selon le procédé de l'invention (en hachuré sur la figure). Cette comparaison est effectuée dans le cas du premier parcours du cycle en « V » (à gauche sur la figure) et dans le cas d'une itération de rang n, supposée proche de la validation finale du système piloté (à droite sur la figure).

On voit nettement, une fois réalisé l'investissement initial correspondant aux essais de caractérisation des modèles, le gain substantiel obtenu sur le volume total des essais, particulièrement en ce qui concerne les essais de réglage.

La figure 7 donne, pour chacun des domaines techniques ou des métiers pouvant intervenir dans la conception et la réalisation d'un système piloté, l'organisation générale d'une bibliothèque de modèles génériques mise à disposition d'un utilisateur du procédé selon l'invention par le titulaire de l'invention et destinée à servir de base aux modèles plus spécifiques à créer par cet utilisateur à l'occasion de l'étude d'un système piloté, ou même à fournir directement les modèles appropriés.

Cette bibliothèque comporte deux parties :
- Un outil de traitement 21 qui remplit les fonctions de définition des entrées-sorties et des variables associées, de calcul des états et de résolution des équations internes, non visible pour l'utilisateur ; cet outil permettant de gérer à partir d'une même représentation une pluralité de modèles. Il contient toutes les fonctionnalités pour la mise en oeuvre d'une bibliothèque de modèles.
- Une bibliothèque de modèles proprement dite 22, qui comprend elle-même deux sous-ensembles :
   - une bibliothèque (23) de modèles physiques élémentaires, caractérisés par le fait qu'ils mettent en oeuvre des paramètres génériques et qu'ils ne sont pas modifiables,
   - une bibliothèque (24) de modèles composés à partir de modèles élémentaires et qui correspondent à des composants standard complexes, des extensions d'éléments de base ou des composants personnalisés,
l'ensemble des modèles de ces deux catégories présentant le plus grand nombre d'options et de choix paramétriques de façon à correspondre au plus grand nombre possible de cas d'utilisation, et à éviter ainsi aux utilisateurs la charge du développement de modèles spécifiques adaptés à leurs applications.

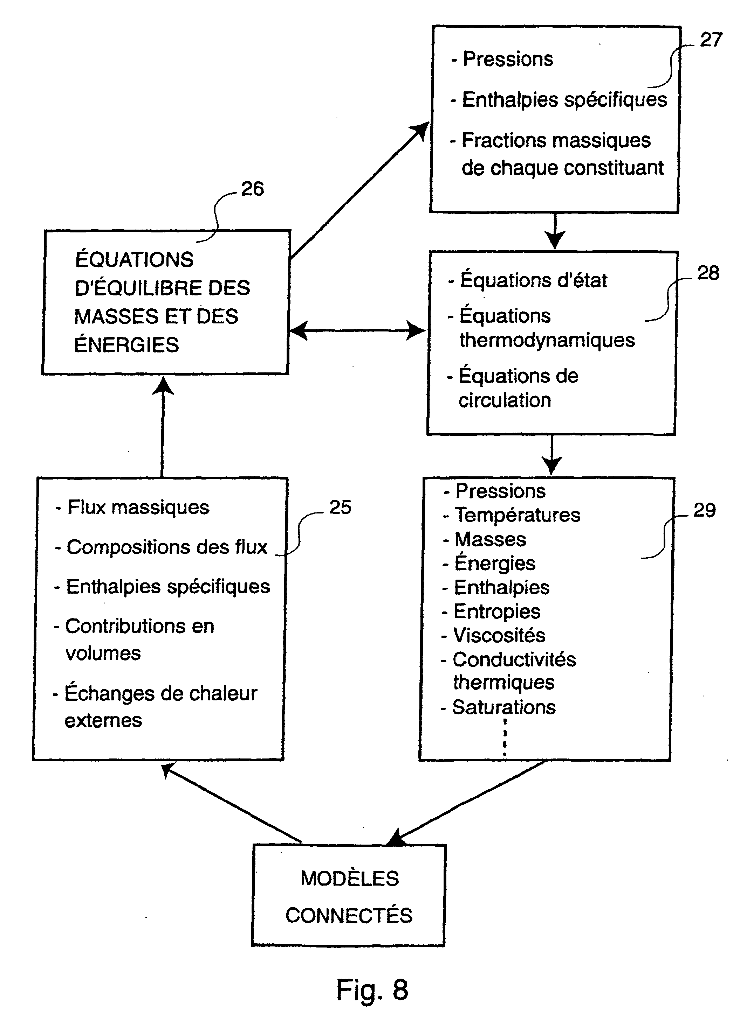

La figure 8 illustre de façon plus détaillée l'organisation d'une bibliothèque de modèles génériques telle qu'elle est décrite par la figure 7, en prenant l'exemple du domaine technique de la Thermodynamique des Fluides.

Elle présente le fonctionnement de l'outil de traitement relatif au domaine précité, utilisable pour la modélisation de processus faisant intervenir aussi bien des flux liquides que gazeux, à l'état pur ou composé, ou encore des fluides mêlant les phases liquides et gazeuses.

L'ensemble des grandeurs d'entrée 25, en provenance des différents modèles connectés à l'outil de traitement, comprend notamment :
- les flux massiques des fluides concernés,
- les compositions de ces flux,
- les enthalpies spécifiques,
- les contributions en volumes,
- les échanges de chaleur externes.

Ces grandeurs d'entrée sont introduites dans un module 26 contenant les équations d'équilibre des masses et des énergies.

La résolution de ces équations détermine l'ensemble 27 des grandeurs d'état telles que pressions, enthalpies spécifiques, fractions massiques de chaque constituant.

Ces grandeurs d'état sont prises en compte par le module 28 qui contient les équations d'état, les équations thermodynamiques et les équations de circulation dynamique des fluides, en relation avec les équations d'équilibre 26.

La résolution de ces différentes équations détermine l'ensemble 29 des grandeurs de sortie telles que des caractéristiques de thermophysiques, à savoir: pressions, températures, masses ou fractions massiques, énergies, enthalpies, entropies, viscosité, conductivité thermique, caractéristiques de saturation.

Toutes ces variables de sorties sont retournées aux différents modèles connectés (bloc 30).

## Revendications

1. Procédé d'optimisation de la conception, de la réalisation et de la mise au point d'un système piloté intégrant au moins un domaine technique, ce procédé mettant en oeuvre un cycle de conception et de réalisation de type cycle en « V » à plusieurs niveaux,
**caractérisé en ce qu'**à chacun des niveaux dudit cycle, il met en oeuvre au moins un modèle contribuant à établir un ensemble de liens opératoires entre les phases de conception correspondant à la branche descendante dudit cycle pour ce niveau et les étapes de validation correspondantes de la branche montante, en vue de valider les spécifications techniques propres à ce niveau préalablement au passage au niveau suivant.

2. Procédé selon la revendication 1,
**caractérisé en ce que** la mise en oeuvre des modèles associés à chaque niveau du cycle d'ingénierie comporte au moins les étapes suivantes :
- établissement des spécifications des modèles nécessaires à partir des besoins résultant du processus de conception correspondant au niveau considéré ;
- élaboration et validation des dits modèles grâce à des essais de caractérisation au niveau de la structure des modèles et de l'identification des paramètres associés ;
- essais de validation système selon le niveau correspondant de la branche montante du cycle ;
- prise en compte des résultats qualitatifs et quantitatifs fournis par les modèles validés, dans le processus de conception et réitération éventuelle de la démarche jusqu'à ce que les exigences du processus de conception soient atteintes ;
- détermination des spécifications du niveau considéré.

3. Procédé selon la revendication 2,
**caractérisé en ce que** les spécifications des modèles affectés à chaque niveau du cycle d'ingénierie sont établies en complète cohérence avec les modèles du niveau supérieur aussi bien du point de vue de la cohérence structurelle que de celui de la cohérence des flux d'informations et des flux physiques et de la cohérence fréquentielle.

4. Procédé selon la revendication 2,
**caractérisé en ce que** les modèles validés élaborés à tous les niveaux du cycle d'ingénierie font avantageusement l'objet d'opérations de réduction notamment par l'introduction de variables adimensionnelles ou des mises à l'échelle, chaque modèle dans sa forme primaire pouvant faire l'objet de différentes formes de réduction.

5. Procédé selon la revendication 4,
**caractérisé en ce que** les modèles en forme réduite élaborés à chaque niveau du cycle d'ingénierie constituent chacun un sous-ensemble d'un ou plusieurs modèles du niveau supérieur.

6. Procédé selon la revendication 2,
**caractérisé en ce que** les modèles élaborés aux différents niveaux du cycle d'ingénierie appartiennent à différentes classes, notamment :
- les modèles de connaissance ou « boîtes blanches », intégrant les lois de la physique ;
- les modèles de représentation ou « boîtes noires », dont le comportement est similaire au phénomène physique représenté, mais dont les paramètres n'ont pas de signification physique ;
- les modèles mixtes, qui mêlent des éléments des deux classes précédentes.

7. Procédé selon la revendication 2,
**caractérisé en ce que** les modèles élaborés aux différents niveaux du cycle d'ingénierie appartiennent à différents types, notamment :
- les modèles d'analyse, destinés à la compréhension de phénomènes particuliers ;
- les modèles de conception, utilisés principalement lors des choix qualitatifs de conception et des dimensionnements ;
- les modèles de simulation, destinés à étudier les comportements dans les différents cas de fonctionnement des systèmes, sous-ensembles ou composants représentés ;
- les modèles en temps réel, dont le fonctionnement temporel est conforme à l'entité physique représentée.

8. Procédé selon la revendication 4,
**caractérisé en ce que** les modèles validés élaborés aux différents niveaux du cycle d'ingénierie, dans leurs formes primaires ou dans leurs formes réduites, ainsi éventuellement que les résultats fournis par ces modèles, sont rangés dans une bibliothèque de modèles hiérarchique, organisée selon les différents niveaux du cycle d'ingénierie et selon les différents types et classes de modèles, de manière à enrichir progressivement le savoir-faire de l'utilisateur du procédé selon l'invention et à faciliter au maximum la réutilisation de ces modèles lors de cycles d'ingénierie similaires ultérieurs.

9. Procédé selon la revendication 8,
**caractérisé en ce que** des bibliothèques de modèles pré-élaborés sont mises à disposition des utilisateurs dans chacun des domaines techniques ou des métiers susceptibles d'intervenir dans un projet de système piloté, ces modèles étant eux-mêmes **caractérisés par** leur grande généricité et par le grand nombre d'options offertes au niveau de la structure de ces modèles et des choix paramétriques.

10. Procédé selon la revendication 9,
**caractérisé en ce que** la dite bibliothèque de modèles génériques mise à la disposition des utilisateurs comprend, dans chaque domaine technique concerné, un outil de traitement assurant la prise en compte des variables d'entrée-sortie, le calcul des états et la résolution des différentes équations, une bibliothèque de modèles physiques élémentaires et une bibliothèque de modèles composés.

11. Procédé selon la revendication 9,
**caractérisé en ce que**, outre les bibliothèques de modèles génériques précitées, un ensemble de guides méthodologiques de modélisation, d'analyse, d'établissement des spécifications, de conception à l'aide de modèles, de conduite et d'analyse des essais de validation et de mise en bibliothèque, sont mis à disposition de l'utilisateur.

12. Système pour la mise en oeuvre du procédé selon l'une des revendications précédentes,
**caractérisé en ce qu'**il comprend, pour chacun des niveaux n, des moyens de détermination des spécifications (Sn) d'un ou plusieurs modèles (Mn) en fonction des besoins résultant du processus de conception (Pn), des moyens de mise en cohérence (MCn) de ces spécifications du modèle (Mn) avec un ou plusieurs modèles de niveau supérieur, des moyens de détermination d'une procédure d'essais de caractérisation (ECn) pour l'élaboration et la validation du modèle (Mn), des moyens d'identification des paramètres intervenant dans ce modèle et des moyens de validation de ce modèle (Mn) en fonction des résultats des essais de caractérisation (ECn), des moyens de spécification d'une procédure d'essai de validation (VSn) sur banc d'essais et d'optimisation de cette spécification à l'aide des modèles d'une base des modèles, contenant des modèles n validés sous leur forme primaire et/ou sous ses différentes formes réduites, une boucle de réaction du comportement du modèle validé (Vn) sur le processus de conception de niveau n (Pn) et/ou sur des moyens de détermination techniques de besoins (SPn) avec possibilité de réitération de la démarche de conception, de modélisation et de validation.

13. Système selon la revendication 12,
**caractérisé en ce qu'**il comprend, en tant que base de modèles, une bibliothèque en deux parties comportant :
- un outil de traitement (21) qui remplit les fonctions de définition des entrées-sorties et des variables associées, de calcul des états et de résolution des équations internes, non visible pour l'utilisateur ; cet outil permettant de gérer à partir d'une même représentation une pluralité de modèles,
- une bibliothèque de modèles proprement dite (22), qui comprend elle-même deux sous-ensembles :
- une bibliothèque (23) de modèles physiques élémentaires mettant en oeuvre des paramètres génériques et qui ne sont pas modifiables,
- une bibliothèque (24) de modèles composés à partir de modèles élémentaires et qui correspondent à des composants standard complexes, des extensions d'éléments de base ou des composants personnalisés.

## Patentansprüche

1. Optimierungsverfahren für den Entwurf, die Realisierung und Nachregulierung eines gesteuerten Systems, das mindestens einen technischen Bereich umfasst, wobei dieses Verfahren eine Entwurfs- und Ausführungsphase in der Art von einem «V»-Zyklus auf mehreren Ebenen verwirklicht, **dadurch gekennzeichnet, dass** hiermit auf jeder Ebene des genannten Zyklus mindestens ein Modell verwirklicht wird, um eine Einheit operationeller Verbindungen zwischen den Entwurfs-Phasen herzustellen, die dem Top-down-Entwurf des genannten Zyklus für diese Ebene entsprechen und die Validationsetappen, die dem Bottom-up-Prozess entsprechen, um die technischen Eigenschaften dieser Ebene zu bewerten bevor zur folgenden Ebene übergegangen wird.

2. Verfahren nach Anspruch 1, **dadurch gekennzeichnet, dass** die jeder Ebene der Engineering-Phase zugeordneten Modelle mindestens in folgenden Schritten verwirklicht werden;
- Erstellung der Spezifikationen der aus dem Entwurfsvorgang resultierenden notwendigen Modelle entsprechend der in Betracht gezogenen Ebene;
- Erstellung und Validation der genannten Modelle anhand von Charakterisierungs-Versuchen im Bereich der Struktur von Modellen und der Identifizierung der damit verbundenen Parameter;
- Validationsversuche des Systems gemäß dem den Bottom-up-Prozess entsprechenden Niveau des Zyklus;
- Berücksichtigung der von den bewerteten Modellen gelieferten qualitativen und quantitativen Ergebnisse, im Entwurfsprozess und eventuelle Wiederholung des Vorgangs bis zur Erfüllung der Anforderungen des Entwurfsprozesses;
- Bestimmung der Einzelheiten der in Betracht gezogenen Ebene.

3. Verfahren nach Anspruch 2, **dadurch gekennzeichnet, dass** die Eigenschaften der betroffenen Modelle einer jeden Ebene der Engineering-Phase in vollständiger Kohärenz mit den Modellen einer höheren Ebene erstellt worden sind, sowie aus der Sicht der strukturellen Kohärenz als auch aus der Sicht der Kohärenz der Informationsflüsse und der physikalischen Datenströme und der Häufigkeits-Kohärenz her.

4. Verfahren nach Anspruch 2, **dadurch gekennzeichnet, dass** die auf allen Ebenen erstellten bewerteten Modelle der Engineering-Phase vorteilhaft Reduziervorgängen unterliegen, insbesondere durch die Einführung von dimensionslosen Variablen oder Einstufungen, wobei jedes Modell in seiner Primärform Gegenstand verschiedener Reduzierformen sein kann.

5. Verfahren nach Anspruch 4, **dadurch gekennzeichnet, dass** die auf jeder Ebene der Engineering-Phase in reduzierter Form erstellten Modelle jeweils einen Funktionsbaustein eines oder mehrerer Modelle der höheren Ebene bilden.

6. Verfahren nach Anspruch 7, **dadurch gekennzeichnet, dass** die auf verschiedenen Ebenen der Engineering-Phase erstellten Modelle verschiedenen Klassen angehören, insbesondere:
- die Modelle des Wissens oder « intern getestete », die die Gesetze der Physik integrieren;
- die Modelle der Darstellung oder « extern getestete », deren Verhalten dem dargestellten physikalischen Phänomen ähnlich ist, aber deren Parameter keine physikalische Bedeutung haben;
- die Mischmodelle, die Elemente der zwei vorangehenden Klassen mischen.

7. Verfahren nach Anspruch 2, **dadurch gekennzeichnet, dass** die auf verschiedenen Ebenen der Engineering-Phase erstellten Modelle den verschiedenen Ausführungen angehören, insbesondere:
- die Analysen-Modelle, zur Verständnis von besonderen Phänomenen;
- die Entwurfsmodelle, die hauptsächlich bei den qualitativen Wahlen beim Entwurf und Dimensionierungen benutzt werden;
- die Simulationsmodelle, zur Studie von Verhaltensweisen in verschiedenen Betriebsfällen der Systeme, Bausteinen oder dargestellten Bestandteilen;
- die Modelle in Realzeit, deren zeitlicher Betrieb mit dem dargestellten physikalischen Gebilde gleich ist.

8. Verfahren nach Anspruch 4, **dadurch gekennzeichnet, dass** die bewerteten, auf verschiedenen Ebenen der Engineering-Phase erstellten Modelle, in deren Primärformen oder in reduzierten Formen, sowie eventuell die von diesen Modellen gelieferten Ergebnisse hierarchisch in einer Bibliothek von Modellen nach den verschiedenen Ebenen der Engineering-Phase und organisiert nach den verschiedenen Ausführungen und Klassen der Modelle eingeordnet sind, um progressiv das Know-how des Benutzers des erfindungsgemäßen Verfahrens anzureichern und die Wiederverwendung dieser Modelle im Einvernehmen mit den nachfolgenden Engineering-Phasen auf ein Höchstmass zu vereinfachen.

9. Verfahren nach Anspruch 8, **dadurch gekennzeichnet dass** die Bibliotheken vorher ausgearbeiteter Modelle den Benutzern in jeden Technischen Sektoren oder den Fachleuten, die dazu fähig sind, sich in einem der geleiteten Systemprojekte einzuschalten, zur Verfügung gestellt werden, wobei diese Modelle selbst durch ihr großes generisches Vermögen **gekennzeichnet** sind und durch die große Anzahl von angebotenen Wahlmöglichkeiten im Bereich der Struktur dieser Modelle und der parametrischen Entscheidung.

10. Verfahren nach Anspruch 9, **dadurch gekennzeichnet, dass** besagte, den Benutzern zur Verfügung gestellte Bibliothek von generischen Modellen in jedem betroffenen technischen Bereich ein Datenverarbeitungsinstrument umfasst, womit die Berücksichtigung der Eingabe-Ausgabe-Variablen, die Kalkulation der Zustände und die Lösung verschiedener Gleichungen, eine Bibliothek von elementaren physikalischen Modellen und eine Bibliothek von zusammengesetzten Modellen gesichert ist.

11. Verfahren nach Anspruch 9, **dadurch gekennzeichnet, dass** außer den vorher genannten Bibliotheken von generischen Modellen, ein Komplex von methodologischen Modellierungs-, Analysen-, Spezifikationserstellungs-, Entwurfs-Führern anhand von Modellen, der Führung und Analyse von Validationsversuchen und der Ablage in der Bibliothek, dem Benutzer zur Verfügung gestellt werden.

12. System zur Ausführung des Verfahrens nach einem der vorangehenden Ansprüche, **dadurch gekennzeichnet dass** es für jede Ebene n Mittel zur Bestimmung der Eigenschaften (Sn) von einem oder mehreren Modellen (Mn) in Funktion der aus dem Entwurfsprozess (Pn) resultierenden Bedürfnissen umfasst, Mittel zur Abstimmung (MCn) dieser Eigenschaften des Modells (Mn) mit einem oder mehreren Modellen einer höheren Ebene, Mittel zur Bestimmung einer Prozedur von Charakterisierungsversuchen (ECn) für die Ausarbeitung und Validation des Modells (Mn), Mittel zur Identifizierung der Parameter, die in diesem Modell intervenieren und Validationsmittel dieses Modells (Mn) in Funktion der Ergebnisse der Charakterisierungsversuche (ECn), Mittel zur Spezifikation einer Prozedur eines Validationsversuches (VSn) auf einem Prüfstand und Optimierung dieser Spezifikation anhand von Modellen einer Modell-Grundlage, die bewertete Modelle n unter deren Primärform und/oder unter deren verschiedenen reduzierten Formen enthalten, eine Rückkopplungsschleife des Verhaltens des bewerteten Modells (Vn) auf den Entwurfsvorgang auf der Ebene n (Pn) und/oder auf Mittel für die technische Bestimmung des Bedarfs (SPn) mit einer Wiederholungsmöglichkeit der Entwurfs-, der Modellierungs- und Validations-Vorgehensweise.

13. System nach Anspruch 12, **dadurch gekennzeichnet, dass** dieses als Grundlage von Modellen eine Bibliothek in zwei Teilen umfasst, mit:
- einem Datenverarbeitungsinstrument (21), das die Definierungsfunktionen der Eingaben-Ausgaben und der damit verbundenen Variablen, der Kalkulation der Zustände und der Lösung von internen Gleichungen, die für den Benutzer unsichtbar sind, erfüllt, wobei es dieses Instrument für den Benutzer ermöglicht, aus ein und derselben Darstellung eine Vielzahl von Modellen zu leiten,
- eine eigentliche Bibliothek von Modellen (22), die selbst zwei Untergruppierungen umfasst:
- eine Bibliothek (23) von elementaren physikalischen Modellen, die die generischen Parameter verwirklichen und die nicht veränderbar sind,
- eine Bibliothek (24) von Modellen, die aus elementaren Modellen zusammengesetzt sind, und die komplizierten Standard-Bestandteilen, Erweiterungen von Basiselementen oder personalisierten Bestandteilen entsprechen.

## Claims

1. Method for optimising the design, implementation and development of a piloted system integrating at least one technical area, this method using a "V"-type design and implementation cycle having several levels,
**characterized in that** at each level of said cycle, it uses at least one model contributing towards forming a set of operating links between the design phases corresponding to the downward branch of said cycle for this level and the corresponding validation steps of the upward branch, with a view to validating the technical specifications specific to this level before moving onto the following level.

2. Method according to the claim 1,
**characterized in that** the use of models associated with each level of the engineering cycle comprises at least the following steps:
- drawing up necessary model specifications on the basis of needs resulting from the design process related to the level under consideration;
- preparing and validating said models through characterization tests of model structure and identification of associated parameters;
- system validation tests at the corresponding level of the upward branch of the cycle;
- entering qualitative and quantitative results of validated models into the design process, and optional reiteration of steps until the requirements of the design process have been met;
- determining the specifications of the level under consideration.

3. Method according to the claim 2, **characterized in that** the specifications of the models allocated to each level of the engineering cycle are defined in full coherency with models of the next higher level both from a structural coherency viewpoint and regarding coherency of data flows, physical flows and frequency coherency.

4. Method according to the claim 2,
**characterized in that** the validated models prepared at every level of the engineering cycle are advantageously the subject of reducing operations, in particular through the introduction of a dimensional variables or scaling, each model in its primary form possibly being the subject of different forms of reduction.

5. Method according to the claim 4,
**characterized in that** the models in reduced form prepared at each level of the engineering cycle each form a subassembly of one or more higher level models.

6. Method according to the claim 2,
**characterized in that** the models prepared at the different levels of the engineering cycle belong to different classes, in particular:
- knowledge models or ''white boxes" integrating laws of physics;
- representation models or "black boxes" whose behaviour is similar to the physical phenomenon represented, but whose parameters have no physical meaning;
- mixed models, which combine elements of the two preceding classes.

7. Method according to the claim 2,
**characterized in that** the models prepared at the different levels of the engineering cycle belong to different types, in particular:
- analysis models, intended for the comprehension of special phenomena;
- design models, chiefly used for qualitative design choices and sizing;
- simulation models, intended for behavioural studies in different operating cases of the systems, subassemblies or components represented;
- real-time models, whose time functioning conforms to the physical entity represented.

8. Method according to the claim 4,
**characterized in that** the validated models prepared at the different levels of the engineering cycle, in their primary forms or in their reduced forms, and optionally the results provided by these models, are filed in a hierarchical library of models organized as per the different levels of the engineering cycle and as per the different types and classes of models, for the gradual enrichment of user know-how of those using the method of the invention and optimum assistance in re-use of these models during similar subsequent engineering cycles.

9. Method according to the claim 8,
**characterized in that** the libraries of pre-prepared models are made available to users in each of the technical areas or professions likely to take part in a project for a piloted system, these models themselves being **characterized by** their extensive generic nature and the large number of options offered regarding the structure of these models and choice of parameters.

10. Method according to the claim 9,
**characterized in that** said library of generic models made available to users, in each technical area concerned, comprises a processing tool ensuring consideration of input-output variables, status calculation and resolution of the various equations, a library of elementary physical models and a library of composite models.

11. Method according to the claim 9,
**characterized in that** in addition to said libraries of generic models, a set of guides on modelling methodology, analysis, specification determination, model assisted design, conducting and analysis of validation tests and library filing are made available to the user.

12. System for implementing the method according to one of the preceding claims,
**characterized in that**, for each level n, it comprises means (Sn) for determining the specifications of one or more models (Mn) in relation to needs resulting from the design process (Pn), means (MCn) for bringing these specifications of model (Mn) into coherency with one or more models of a higher level, means for determining characterization test procedure (ECn) to prepare and validate model (Mn), means for identifying parameters involved in this model and means for validating this model (Mn) in relation to the results of characterization tests (ECn), means for specifying validation test procedure (VSn) on a test bench and for optimising this specification with the aid of models from a model database containing validated models n in their primary form and/or its different reduced forms, a behavioural reaction loop of the validated model (Vn) on the design process of level n (Pn) and/or on technical means for determining needs (SPn) with optional reiteration of the design, modelling and validation steps.

13. System according to the claim 12,
**characterized in that** it comprises, as model base, a two-part library comprising:
- a processing tool (21) which fulfils the functions of defining inputs-outputs and associated variables, status calculation and resolution of internal equations, invisible to the user; this tool making it possible to manage a plurality of models from one same representation,
- a library of models properly so-called (22) which itself comprises two subassemblies:
. a library (23) of elementary physical models applying generic parameters which are not modifiable,
. a library (24) of models composed from elementary models which correspond to standard complex components, extensions of basic elements or personalized components.
